# EUROPEAN PATENT SPECIFICATION

(11) **EP 3 918 879 B1**
(45) Date of publication and mention of the grant of the patent: **25.03.2026**
(21) Application number: 20747563.3
(22) Date of filing: 31.01.2020
(51) Int. Cl.: H05B 3/34

(54) **APPARATUS AND METHOD FOR A HEATING MAT**
VORRICHTUNG UND VERFAHREN FÜR EINE HEIZMATTE
APPAREIL ET PROCÉDÉ POUR UNE COUVERTURE CHAUFFANT

(30) Priority: 01.02.2019 SE 1900015
(43) Date of publication of application: 08.12.2021
(73) Proprietor: Lindskog, Kjell, 931 31 Skellefteå (SE)
(72) Inventor: Lindskog, Kjell, 931 31 Skellefteå (SE)
(74) Representative: Ehrner & Delmar Patentbyrå AB
(86) International application number: PCT/SE2020/050082
(87) International publication number: WO 2020/159428

(56) References cited:
- DE-A1- 2 251 207
- GB-A- 1 014 468
- GB-A- 950 953
- GB-A- 950 953
- US-A1- 2001 002 669
- US-A1- 2002 117 494
- US-A1- 2009 032 524
- US-A1- 2012 279 953
- US-A1- 2015 366 367
- US-A1- 2017 071 032

## Description

### Technical field

The present invention relates to an apparatus for a heating mat according to the preamble of claim 1 which has a large number of applications. The invention also relates to a method of manufacturing and uses.

### Background of the invention

There is a great demand for a formable and flexible heating mat within a number of different areas, such as for heating various objects for a shorter or longer period, for example, for repair work on outdoor details at temperatures below zero, for example, heating roof parts, etc., drainage systems, etc. Also, underfloor heating is possible as well as hospital stretchers, for example, for transportation of persons suffering from hypothermia whereby subdivision in different heating sections can be arranged and so forth. It should be understood that the heating mat according to the invention has a large number of applications in addition to those exemplified above.

The prior art documents US 2015/366367 A1, US 2012/279953 A1, US 2001/002669 A1, GB 950 953 A and US 2002/117494 A1 disclose examples of conventional heating mats which are formable and flexible.

### The object of the invention

The object of the invention is to provide a heating mat which has a very large number of applications.

This object is achieved by the features stated in the claims.

The invention shows both technical and economic advantages.

### Short description of the drawings

Embodiments of the invention will now be described in more detail with reference to the accompanying drawings, in which
**Figure 1** schematically shows an exploded side view of a heating mat according to the invention,
**Figure 2** schematically shows parts of the heating mat according to Figure 1 in assembled state,
**Figure 3** schematically shows an assembled heating mat in a view from above,
**Figure 4** schematically shows a method for joining together a heating mat according to the invention,
**Figure 5** schematically shows an alternative method for joining together the heating mat,
**Figure 6** schematically shows an alternative embodiment of a heating mat according to the invention in a view from above,
**Figure 7** schematically shows a side view of the heating mat according to Figure 6, and
**Figure 8** schematically shows a method for joining together the heating mat according to Figures 6 and 7.

### Detailed description of shown embodiments

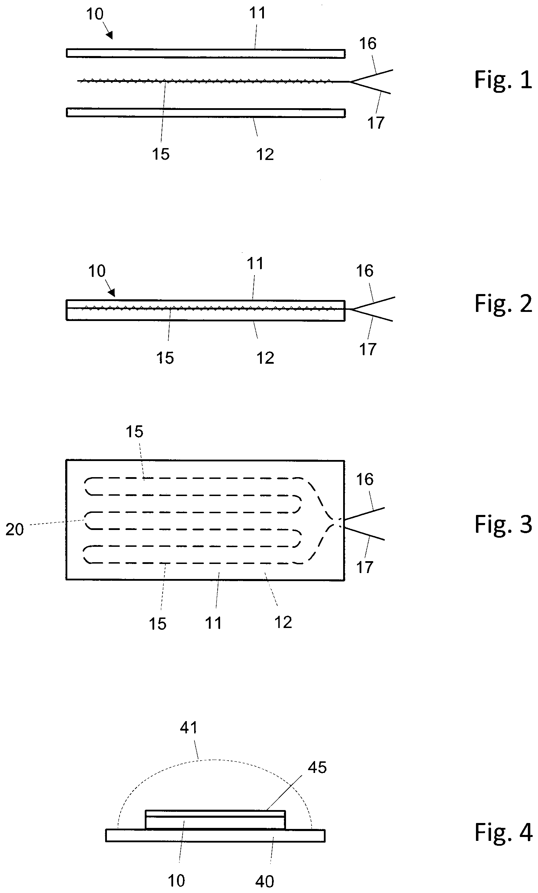

From the exploded side view shown in Figure 1 the basic construction of the heating mat according to the invention can be inferred. The heating mat 10 shown comprises an upper flexible mat 11 made of, preferably reinforced, thermoplastic. Furthermore, the heating mat 10 comprises a lower flexible mat 12 made of, preferably reinforced, thermoplastic. The mats 11 and 12 may be similarly constructed, but variations may also occur when appropriate.

Between the mats 11 and 12 a heat emitting device 15 is arranged which is constructed by using an electric conductive wire having an electrically insulating surface layer. Also, electric conductive strips having an electrically insulting surface layer can be used.

According to the invention, the wires or strips are knitted or crocheted in any pattern and in any mesh size depending on for example desired heat performance, etc. Parallel wires or strips make it possible to have several electrical circuits which can be advantageous in some applications or at wire break/strip break, for example, in one electrical circuit, whereby a backup circuit is present. Of course, the knitted/crocheted device 15 can have different designs. It can be formed in one piece, for example, but can also have strip-like shape to permit desired laying pattern in the heating mat. The mesh size of the device can be varied, if desired, depending on the desired heating pattern and performance requirements.

As for the two thermoplastic mats 11, 12, these may be made of polyvinyl chloride (PVC), for example, but it should be understood that other thermoplastic variants are sometimes suitable to use, such as, for example, polyethylene (PE), ABS, PET, etc. Also, mixtures of different thermoplastic types can sometimes be advantageous to use in certain context. It should thus be understood that it is possible to vary to a large extent the choice of thermoplastic material.

The thermoplastic mats have usually a suitable reinforcement and can sometimes be relatively thin.

The parts of the heating mat described above are combined to a heating mat 10, as shown in Figure 2. In this connection, an edge reinforcement can be provided, if needed, which has both an aesthetic function and allows a later vacuum suction from the interior of the heating mat at a subsequent assembly phase.

Figure 3 shows a possible placement of a heating device 15 produced according to the invention which is created by knitting or crocheting as previously described. The case shown has knitted or crocheted loops 20 which are placed sling-like and according to heat requirements. The external connecting wires of the heating device 15 are designated 16 and 17. The shape of the device can of course be varied as required.

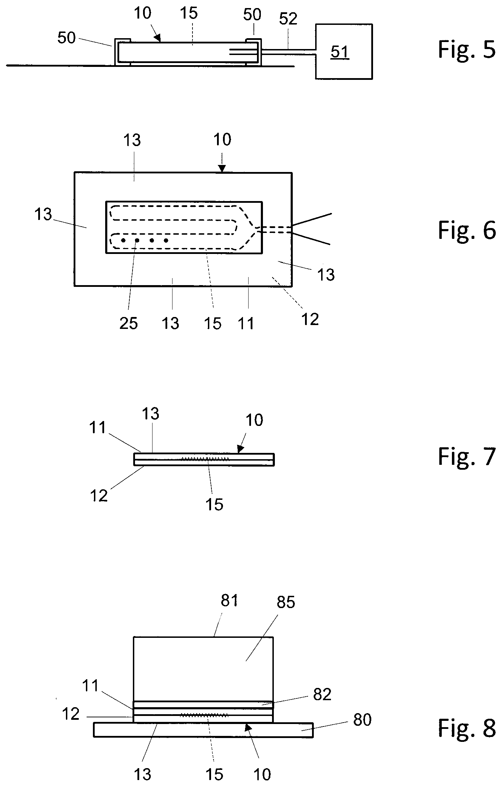

When assembling the heating mat several different possibilities are possible, and Figures 4 and 5 show two different examples.

In Figure 4, the preassembled heating mat 10 is placed on a heatable plate 40 of metal, for example, and a vacuum bag 41 is activated for compression of the heating mat 10, and the heating mat is heated to required temperature for reliable internal adhesion, so that the mat becomes reliable self-assembled, i.e. the heating mat is integrally formed. In the example shown, a group of holes (not shown) has been arranged in the upper mat, for instance, and a spacer element 45 with necessary recesses, so that air and gas can be evacuated from the interior of the heating mat by means of the vacuum bag 41. The vacuum bag 41 ensures good compression of the heating mat 10 upon completion thereof. The heating must be monitored so that the exterior of the mats is not adversely affected at the same time as the internal adhesion operation is satisfactory.

Figure 5 shows an alternative manufacturing method in which a tape 50 or equivalent is used for sealing the end portions of the heating mat 10. Heating and temperature control are normally carried out via the device 15. A vacuum suction device 51 is arranged as shown in the figure, its connecting pipe 52 being inserted against the device 15 where the connecting wires 16, 17 of the device leave the heating mat 10. If necessary, a heating plate can also be used in this embodiment.

It should be understood that the manufacturing methods according to Figures 4 and 5 can be combined, if needed.

Figures 6 and 7 show an embodiment of the heating mat 10 according to the invention having a circumferential collar portion 13 in which the two exterior mats 11, 12 of thermoplastic abut directly against each other in the collar portion 13 extending outside the heating device 15. This embodiment allows for example large freedom of choice with regard to the outer contour of the heating mat 10 with accompanying special adjustments.

The upper 11 of the two exterior mats 11, 12 is provided with a group of holes 25 which enable evacuation of air/gas from the inner portion of the heating mat 10. Some of the holes 25 are indicated in Figure 6.

In Figure 8, a manufacturing method for a heating mat 10 with a circumferential collar 13 is exemplified. A temperature adjustable heating table 80 is used upon which the heating mat is placed in a pre-assembled condition, after which a lid 81 comprising a spacer element 82 is placed on top of the heating mat 10. The lid 81 is so designed that the entire heating mat 10 is compressed by the lid and its spacer element 82. The lid comprises a vacuum suction device 85 which provides air and gas evacuation from the interior of the mat, so that the heating device 15 obtains maximum contact with the two thermoplastic mats 11, 12. The air and gas evacuation takes place via the holes 25 provided in the upper thermoplastic mat, and the spacer element 82 has necessary recesses for the suction action of the vacuum suction device 85. The heating in relation to the fusion into an assembled and finished heating mat takes place via the heating table 80. Also, the heating device can take part in the heating operation, if required.

Assembling time and temperature are of course dependent on the material selected.

Sometimes, it may be advantageous to use different thermoplastic materials in both thermoplastic mats.

The exterior surface of the thermoplastic mats can sometimes support a coating or foil for aesthetic or practical reasons, etc. Application can be done afterwards and sometimes even in advance.

It is to be understood that the heating pads according to the invention may have different sizes and shapes and may also be 3-dimentional. The heating mats are normally flexible and shapeable so that good adaptability exists for different field of applications.

In operation, the desired working temperature of the heating mat is controlled by controlling electric current dependent upon the measured resistance and temperature of the device. The maximum operating temperature of the heating mat is, of course, limited by the temperature resistance of the thermoplastic.

Of course, it should be understood that one or more heating devices could also be arranged in one and the same heating mat.

Below are some non-limiting examples of filed of applications of the heating mat according to the invention.

Prevention of ice-bounding of materials during transport and storage of materials.

Prevention or thawing of ice formation of roofing environments and associated dewatering details.

Stretchers or rescue stretcher in which the heating mat is divided into three different devices, for example, to be able to set different heating for different body parts, which for example is advantageous when a patient is heavily suffering from hypothermia.

Heating mattresses, thawing mats for frozen ground, providing underfloor heating, etc. Heating of balcony floors and terrace floors, etc.

Defrosting and/or retention of heat of mechanical components in outdoor environment, for example, during maintenance and repairs, for example. For example, it can be used as a heat generating vacuum bag during repairs, whereby the heat generation can be arranged variable and self-regulating.

The flexibility of the heating mat enables large possibilities for matching the design of the object to be heated.

It should be understood that the heating mat according to the invention has a very wide range of application in addition to what has been exemplified above and where there are great possibilities of variation.

Heat output and desired heat performance are regulated by desired power supply to present device.

When utilization of the heat output of the device of a heating mat, temperature control is carried out by measuring the resistance of the device and consequent current control. The same reasoning applies when the device takes part in heating together the heating mat according to the invention. To use constant voltage and varying current pulses for different heating needs is usually advantageous.

Additional temperature measurement on the external surface of the heating mat can sometimes be advantageous both in manufacturing and use.

Furthermore, it should be mentioned that the assembly effect of the heating mat can some time be increased by adhesive foils or equivalent.

It should be understood that the knitted or crocheted device can be designed in many different ways and effectively adapted to different needs regarding heating pattern.

Furthermore, it should be understood that the knitting or crocheting of the heat emitting device of the heating mat results in that the heating mat obtain a very good flexibility in all directions and also a very good resistance to point loads, for example, which is very advantageous. The heating mat withstands a large point load also on uneven ground without being destroyed.

Chemical-resistant thermoplastics can be used in troublesome environments. Also, high temperatures can be met by choosing the appropriate thermoplastic quality.

If necessary, the heating mat can be made very thin.

By varying the knitting or crocheting pattern within the heat emitting device, for example by varying mesh size, the heating pattern in the different zones of the heating mat can be varied.

Thus, the invention is not limited to what is shown and described, instead changes and modifications thereof are, of course, possible within the scope of protection of the appended claims.

## Claims

1. Heating mat (10) comprising two mats (11, 12) of thermoplastic between which mats (11, 12) at least one heat emitting device (15) is arranged, **characterized in that** the heat emitting device (15) is produced by knitting or crocheting of a conductive wire or a strip with an electrically insulating surface layer.

2. Heating mat (10) according to claim 1, **characterized in that** the heating mat (10) is integrally formed from the two mat (11, 12) and the heat emitting device (15) by internal adhesion.

3. Heating mat (10) according to any one of claim 1 or 2, **characterized in that** the heat emitting device (15) of the heating mat (10) has connecting wires (16, 17) for connection to an electrical power source.

4. Heating mat (10) according to any one of claim 1-3, **characterized in that** one of the thermoplastic mats (11) has holes (25) for evacuation of air/gas located inside the heating mat (10).

5. Heating mat (10) according to any one of claim 1-4, **characterized in that** the heat emitting device (15) is kept warm by an arrangement arranged for temperature monitoring by measuring resistance of the heat emitting device (15), and that an arrangement is arranged for varying current pulse activities at constant voltage depending on the heating requirement of the heat emitting device (15).

6. Heating mat (10) according to any one of claim 1-5, **characterized in that** meshes formed by knitting or crocheting have different sizes depending on the desired heating pattern within the heat emitting device (15).

7. Method for manufacturing a heating mat (10) according to any one of claims 1-6 **characterized by** after the two mats (11, 12) of thermoplastic and the heat emitting device (15) have been combined exerting compression of the heating mat (10) during removal of air/gas present inside the heating mat (10), and during temperature monitoring heating the heating mat (10) by means of the heat emitting device (15) and/or at least an external heat source (40, 80) until the heating mat (10) becomes integrally formed by internal adhesion.

8. Use of a heating mat according to any one of claims 1-6, **characterized in that** the heating mat (10) is used for the purpose of increasing the temperature in outdoor environments.

9. Use of a heating mat according to any one of claims 1-6, **characterized in that** the heating mat (10) is used for the purpose of increasing the temperature in indoor environments.

10. Use of a heating mat according to any one of claims 1-6, **characterized in that** the heating mat (10) is used to create pressure load and required heating pattern in repair operations.

## Patentansprüche

1. Heizmatte (10), umfassend zwei Matten (11, 12) aus Thermoplast, wobei zwischen den Matten (11, 12) mindestens eine Wärmeabgabevorrichtung (15) angeordnet ist, **dadurch gekennzeichnet, dass** die Wärmeabgabevorrichtung (15) durch Stricken oder Häkeln eines leitfähigen Drahtes oder eines Streifens mit einer elektrisch isolierenden Oberflächenschicht produziert wird.

2. Heizmatte (10) nach Anspruch 1, **dadurch gekennzeichnet, dass** die Heizmatte (10) durch innere Adhäsion aus den beiden Matten (11, 12) und der Wärmeabgabevorrichtung (15) integral gebildet ist.

3. Heizmatte (10) nach einem der Ansprüche 1 oder 2, **dadurch gekennzeichnet, dass** die Wärmeabgabevorrichtung (15) der Heizmatte (10) Anschlussdrähte (16, 17) zum Anschluss an eine elektrische Stromquelle aufweist.

4. Heizmatte (10) nach einem der Ansprüche 1-3, **dadurch gekennzeichnet, dass** eine der Thermoplastmatten (11) Löcher (25) aufweist, um innerhalb der Heizmatte (10) befindliche(s) Luft/Gas zu evakuieren.

5. Heizmatte (10) nach einem der Ansprüche 1-4, **dadurch gekennzeichnet, dass** die Wärmeabgabevorrichtung (15) durch eine Anordnung warm gehalten wird, die zur Temperaturüberwachung durch Messen des Widerstands der Wärmeabgabevorrichtung (15) angeordnet ist, und dass eine Anordnung zum Variieren von Stromimpulsaktivitäten bei konstanter Spannung in Abhängigkeit von dem Heizbedarf der Wärmeabgabevorrichtung (15) angeordnet ist.

6. Heizmatte (10) nach einem der Ansprüche 1-5, **dadurch gekennzeichnet, dass** durch Stricken oder Häkeln gebildete Maschen in Abhängigkeit von dem gewünschten Heizmuster innerhalb der Wärmeabgabevorrichtung (15) unterschiedliche Größen aufweisen.

7. Verfahren zur Fertigung einer Heizmatte (10) nach einem der Ansprüche 1-6, **dadurch gekennzeichnet, dass** nach Kombinieren der beiden Matten (11, 12) aus Thermoplast und der Wärmeabgabevorrichtung (15) Kompression der Heizmatte (10) ausgeübt wird, während Luft/Gas, die/das innerhalb der Heizmatte (10) vorhanden ist, entfernt wird, und während Temperaturüberwachung die Heizmatte (10) mittels der Wärmeabgabevorrichtung (15) und/oder mindestens einer externen Wärmequelle (40, 80) erwärmt wird, bis die Heizmatte (10) durch innere Adhäsion integral gebildet ist.

8. Verwendung einer Heizmatte nach einem der Ansprüche 1 bis 6, **dadurch gekennzeichnet, dass** die Heizmatte (10) zur Temperaturerhöhung in Außenumgebungen verwendet wird.

9. Verwendung einer Heizmatte nach einem der Ansprüche 1 bis 6, **dadurch gekennzeichnet, dass** die Heizmatte (10) zur Temperaturerhöhung in Innenraumumgebungen verwendet wird.

10. Verwendung einer Heizmatte nach einem der Ansprüche 1 bis 6, **dadurch gekennzeichnet, dass** die Heizmatte (10) zur Erzeugung von Druckbelastung und erforderlichem Heizmuster bei Reparaturvorgängen verwendet wird.

## Revendications

1. Natte chauffante (10) comprenant deux nattes (11, 12) de thermoplastique, nattes (11, 12) entre lesquelles est disposé au moins un dispositif émetteur de chaleur (15), **caractérisée en ce que** le dispositif émetteur de chaleur (15) est produit par tricotage ou crochetage d'un fil conducteur ou d'une bande avec une couche de surface électriquement isolante.

2. Natte chauffante (10) selon la revendication 1, **caractérisée en ce que** la natte chauffante (10) est formée d'une seule pièce à partir des deux nattes (11, 12) et du dispositif émetteur de chaleur (15) par adhésion interne.

3. Natte chauffante (10) selon l'une quelconque des revendications 1 et 2, **caractérisée en ce que** le dispositif émetteur de chaleur (15) de la natte chauffante (10) comporte des fils de raccordement (16, 17) pour un raccordement à une source d'alimentation électrique.

4. Natte chauffante (10) selon l'une quelconque des revendications 1 à 3, **caractérisée en ce qu'**une des nattes thermoplastiques (11) comporte des trous (25) pour l'évacuation de l'air/du gaz situé à l'intérieur de la natte chauffante (10).

5. Natte chauffante (10) selon l'une quelconque des revendications 1 à 4, **caractérisée en ce que** le dispositif émetteur de chaleur (15) est maintenu chaud par un agencement conçu pour la surveillance de la température par mesure de la résistance du dispositif émetteur de chaleur (15), et **en ce qu'**un agencement est conçu pour faire varier des activités d'impulsion de courant à tension constante en fonction des besoins de chauffage du dispositif émetteur de chaleur (15).

6. Natte chauffante (10) selon l'une quelconque des revendications 1 à 5, **caractérisée en ce que** les mailles formées par tricotage ou crochetage ont des tailles différentes en fonction du motif de chauffage souhaité à l'intérieur du dispositif émetteur de chaleur (15).

7. Procédé destiné à fabriquer une natte chauffante (10) selon l'une quelconque des revendications 1 à 6, **caractérisé par**, après la combinaison des deux nattes (11, 12) de thermoplastique et du dispositif émetteur de chaleur (15), la soumission de la natte chauffante (10) à une compression lors du retrait de l'air/du gaz présent à l'intérieur de la natte chauffante (10), et pendant la surveillance de la température, le chauffage de la natte chauffante (10) au moyen du dispositif émetteur de chaleur (15) et/ou d'au moins une source de chaleur externe (40, 80) jusqu'à ce que la natte chauffante (10) soit formée d'une seule pièce par adhésion interne.

8. Utilisation d'une natte chauffante selon l'une quelconque des revendications 1 à 6, **caractérisée en ce que** la natte chauffante (10) est utilisée dans le but d'augmenter la température dans des environnements extérieurs.

9. Utilisation d'une natte chauffante selon l'une quelconque des revendications 1 à 6, **caractérisée en ce que** la natte chauffante (10) est utilisée dans le but d'augmenter la température dans des environnements intérieurs.

10. Utilisation d'une natte chauffante selon l'une quelconque des revendications 1 à 6, **caractérisée en ce que** la natte chauffante (10) est utilisée pour créer une charge de pression et un motif de chauffage requis dans des opérations de réparation.
